# EUROPEAN PATENT SPECIFICATION

(11) **EP 3 111 317 B1**
(45) Date of publication and mention of the grant of the patent: **02.09.2020**
(21) Application number: 15752628.6
(22) Date of filing: 24.02.2015
(51) Int. Cl.: G06F 21/10

(54) **TRANSFERRING AUTHORIZATION FROM AN AUTHENTICATED DEVICE TO AN UNAUTHENTICATED DEVICE**
AUTHENTIFIZIERUNGSÜBERTRAGUNG AUS EINER AUTHENTIFIZIERTEN VORRICHTUNG AN EINE NICHTAUTHENTIFIZIERTE VORRICHTUNG
TRANSFERT D'UNE AUTORISATION D'UN DISPOSITIF AUTHENTIFIÉ À UN DISPOSITIF NON AUTHENTIFIÉ

(30) Priority: 24.02.2014 US 201461943669 P; 23.02.2015 US 201514629211
(43) Date of publication of application: 04.01.2017
(73) Proprietor: Google LLC, Mountain View, CA 94043 (US)
(72) Inventor: DANCIU, Daniel Robert, CH-8002 Zurich (CH)
(74) Representative: Grant, David Michael
(86) International application number: PCT/US2015/017361
(87) International publication number: WO 2015/127463

(56) References cited:
- WO-A1-2012/162432
- US-A1- 2010 043 060
- US-A1- 2010 169 977
- US-A1- 2011 191 859
- US-A1- 2013 347 044
- US-B2- 7 882 034
- US-B2- 8 055 910
- US-B2- 8 627 432

## Description

### TECHNICAL FIELD

Embodiments of the present disclosure relate to the field of content watching services and, more particularly, to a method for sharing of content.

### BACKGROUND

On the Internet, content sharing services allow users to connect to and share information with each other. Many content sharing services allow users to upload, view, and share content, such as video content, image content, audio content, and so on. The content may include content from professional content creators, e.g., movie clips, TV clips, and music videos, as well as content from amateur content creators, e.g., video blogging and short original videos.

A user may want to use a mobile phone to request that certain content stored by a content sharing service be played on a television or a similar device. Currently, sharing content, such as a private video, from a device, such as a mobile phone or tablet, to another device that cannot be authenticated, such as a television or other type of display, is difficult, if not impossible, for a user to accomplish since the other device cannot be authenticated.

Technological background for the disclosed solution can also be found in WO2012/162432 and US2011/191859.

### SUMMARY

The invention is set out in the appended set of claims.

In one embodiment, a method for content sharing where authorization is transferred from an authenticated device to an unauthenticated device is performed. The method includes receiving an indication that a user of a user device wishes to play a content item on a playback device, wherein the indication is associated with a content ID for the content item, a user credential for the user, and a playback device identifier for a playback device, and verifying the content ID, and the user credential. Upon verifying the content ID and the user credential, a token for the content ID, the user identified by the user credential and the playback device identifier is generated and sent to the playback device, wherein the token authorizes play of the content item on the playback device.

In implementations, access rights with respect the content item can be defined based on one or more criteria. The one or more criteria can include at least one of a limited list of viewers having access to the content item, a payment of a fee for viewing the content item, or a viewer age.

In implementations, the method can further include receiving, from a content sharing platform associated with the content item, a request to verify the token, wherein the playback device sent a request to play the content item with the token to the content sharing platform, and upon verification of the token, sending notification of the verification of the token to the content sharing platform. The method can also include verifying that the user is authorized to view the content associated with the content ID.

In implementations, the token can be a non-cryptographic token. The indication can further be associated with a time period for which the playback device is authorized to play the content.

In additional embodiments, computing devices for performing the operations of the above described embodiments are also implemented. Additionally, in embodiments of the disclosure, a computer readable storage media stores methods for performing the operations of the above described embodiments.

### BRIEF DESCRIPTION OF THE DRAWINGS

The present disclosure will be understood more fully from the detailed description given below and from the accompanying drawings of various embodiments of the disclosure.
**Figure 1** illustrates example system architecture, in accordance with one embodiment of the present disclosure.
**Figure 2** illustrates a token system, in accordance with one embodiment of the present disclosure.
**Figure 3** is a flow diagram illustrating one embodiment for a method of content sharing, in accordance with one embodiment of the present disclosure.
**Figure 4** is a flow diagram illustrating one embodiment for another method of content sharing, in accordance with one embodiment of the present disclosure.
**Figure 5** is a block diagram of an exemplary computer system that may perform one or more of the operations described herein.

### DETAILED DESCRIPTION

Content providing services allow users to share content, such as media items or data content, with other users. For example, a user could have content, e.g., a video, which resides on a content sharing platform. The user can view this content on a device where the user can be authenticated, e.g., a mobile phone where the user can log in to the content sharing platform, but the user could desire that the content be played on another device where the user cannot be authenticated, e.g., a playback device such as a television. For example, a user attending a party at a friend's house may want to share a private video on the user's phone by displaying the video on a television so that the other people at the party can see the video on the larger screen. However, unlike the user's phone, the television is not an authenticated device. In other words, the television is not authorized to play the private content of the user (e.g., because the television is the device of the user's friend and is not associated with the user, and/or because the television does not have a keyboard and cannot be authenticated for the user).

A method according to an embodiment provides for transferring authorization from the authenticated user device to the unauthenticated playback device. For example, when a user desires to stream a video from the content sharing platform to a television using an authenticated user device such as a smartphone or tablet, the user may submit a request via the authenticated user device (e.g., by adding the video to a playlist). This request may be received by a token server that can generate a token (e.g., a video verification token) representing authorization to play the video on the television. In particular, the request can be associated with an identifier of the content, e.g., content ID, that the user desires to share and an IP address for the desired playback device. The token server can then send the requested token to the desired playback device, where the token indicates that the particular user (e.g., as identified by the user's credentials and/or user ID) authorizes the particular playback device (e.g., as identified by the IP address) to play the particular content (e.g., a particular video). In one embodiment, the playback device can be authorized to play the content for a particular time period, which can be indicated by the user or automatically determined. In some implementations, the authenticated device such as a user smart phone or tablet may not be online and/or turned on during verification (e.g., while a verification token is being verified by the token server) and/or during playback of the content. For example, a user may add a private video to a shared playlist on a television, and then turn the user's smart phone off. The video can then play correctly on the television, even though the user's smart phone is off.

At playback time, the playback device can send the token with a request for the content to the content sharing platform. The content sharing platform can verify whether the token is valid, e.g., via the token server, and the user has access rights with respect to the requested content. If the token is valid (e.g., the IP address and the content ID within the request correspond to the IP address and the content ID associated with the token, and the token has not been revoked) and the user was authorized to grant permission to play the content, then playback is authorized on the playback device.

Methods according to embodiments provide a desirable user experience because the user can easily play content (e.g., a private or public video) on a playback device without needing to log in to the playback device. Embodiments also provide a method for a user to give limited access to the playback device to play particular content for a particular time, rather than giving the playback device unlimited access to all of the user's content for an unlimited period of time. For example, if the user is wanting to send content to a public playback device, the user might only want the public playback device to be able to display the indicated content for a limited period of time.

In an embodiment, the token can be a code of a certain length (e.g., a random nonce) that is associated with the other necessary information (e.g., IP address, content ID, etc.) that is stored in a data store accessible to the token server. Therefore, if an unauthorized party intercepts the token, the unauthorized party cannot use the token to view the content. Here, if the unauthorized party sends the token along with a request to view content to a content sharing platform, the token server will be able to determine that the IP address sending the request does not match the IP address associated with the token. Therefore, the token server will not verify the token and the content sharing platform will not authorize playback of the content indicated by the token.

In an embodiment, the method uses a non-cryptographic token, where no meaningful information, such as user IDs, content IDs, etc., is included within the token itself. A non-cryptographic token can be a random string of characters (e.g., numbers, letters, symbols, etc.) associated with information stored in a data store (e.g., a user ID, a content ID, an IP address of a playback device, a token validity period, etc.).

In an embodiment, expired tokens (i.e., tokens that are associated with a token validity period that has passed) can be purged from the data store.

In an embodiment, if access rights for the content are modified between the time that the token is issued and the content is played, the token can be invalidated. For example, if the user no longer has permission to access the content at the time the playback device attempts to play the content, then the token will not be verified and the playback device will not be authorized to play the content.

Embodiments of the present disclosure pertain to content sharing, such that the user is able to share content via a mobile device. The mobile device (using either a mobile application of the content sharing platform, a mobile application of a social networking service, a browser application, etc.) can send a request to share content associated with a content sharing platform. From the perspective of the user submitting the request, the sharing process is complete once the user has submitted sharing of the content. Accordingly, aspects of the present disclosure allow for transferring authorization to view content from an authenticated device to an unauthenticated device. Therefore, the user can share the content, and not get frustrated because the playback device is not authenticated to play the content.

Aspects of the present disclosure allow users to stream videos from the Internet to a playback device, irrespective of whether the video is public, private, age-restricted or represents paid content. The above users can be video owners and any other authenticated users with view access rights to the video.

It should be noted that although some aspects of the present disclosure are described with reference to video and/or pages, the present disclosure pertains to various types of content (e.g., media content, such as video, audio, text, images, executable instructions, etc.) and/or various types of GUI documents (e.g., web pages, mobile app documents, etc.).

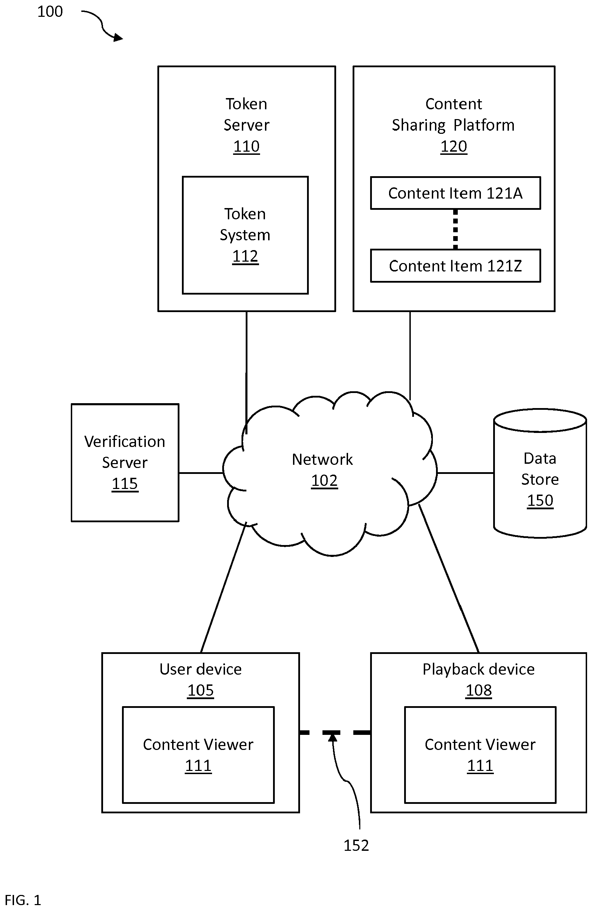

**FIG. 1** illustrates exemplary system architecture 100, in accordance with one implementation of the disclosure, for content sharing. The system architecture 100 includes a user device 105, a playback device 108, a network 102, a data store 150, a content sharing platform 120, a token server 110, and a verification server 115. In one implementation, network 102 may include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof. In one implementation, the data store 150 may be a memory (e.g., random access memory), a cache, a drive (e.g., a hard drive), a flash drive, a database system, or another type of component or device capable of storing data. The data store 150 may also include multiple storage components (e.g., multiple drives or multiple databases) that may also span multiple computing devices (e.g., multiple server computers).

In one implementation, the content sharing platform 120 may be one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to provide a user with access to media items and/or provide the media items to the user. For example, the content sharing platform 120 may allow a user to consume, upload, search for, approve of ("like"), dislike, and/or comment on content items. The content sharing platform 120 may also include a website (e.g., a webpage) that may be used to provide a user with access to the content items.

The content sharing platform 120 may include one or more content items 121A-121Z. Examples of a content item 121A-121Z can include, and are not limited to, digital video, digital movies, digital photos, digital music, website content, social media updates, electronic books (ebooks), electronic magazines, digital newspapers, digital audio books, electronic journals, web blogs, real simple syndication (RSS) feeds, electronic comic books, software applications, etc. In some implementations, content items 121A-121Z can also referred to as media items.

A content item 121A-121Z may be consumed via the Internet and/or via a mobile device application. For brevity and simplicity, an online video (also hereinafter referred to as a video) is used as an example of a content item 121A-121Z throughout this document. As used herein, "media," media item," "online media item," "digital media," "digital media item," "content," and "content item" can include an electronic file that can be executed or loaded using software, firmware or hardware configured to present the digital media item to an entity. In one implementation, the content sharing platform 120 may store the content items 121A-Z using the data store 150.

In general, functions described in one implementation as being performed by the content sharing platform 120 can also be performed on the user devices 105 in other implementations if appropriate. In addition, the functionality attributed to a particular component can be performed by different or multiple components operating together. The content sharing platform 120 can also be accessed as a service provided to other systems or devices through appropriate application programming interfaces, and thus is not limited to use in websites.

In one implementation, verification server 115 may be one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to allow a user to share or comment on media items. The verification server 115 can be an authorization service. For example, the verification server 115 can be utilized to authorize user credentials.

The user device 105 can be a computing device such as personal computer (PCs), laptop, mobile phone, smart phone, tablet computer, netbook computer, etc. In some implementations, user device 105 may also be referred to as a "client device."

The playback device 108 can be any suitable display device that is capable of being connected to a network. For example, the playback device 108 can be a television (e.g., a smart television) or a display monitor connected to a computer device. In one embodiment, the playback device 108 is a television with a dongle plugged into the television, e.g., via an HDMI port, that allows the television to communicate (or pair) with other devices (such as a tablet or a mobile phone), e.g., via a wireless network.

The user device 105 and the playback device 108 can each include a content viewer 111. In one implementation, the content viewer 111 may be an application that allows users to view content, such as images, videos, web pages, documents, etc. For example, the content viewer 111 may be a web browser that can access, retrieve, present, and/or navigate content (e.g., web pages such as Hyper Text Markup Language (HTML) pages, digital media items, etc.) served by a web server. The content viewer 111 may render, display, and/or present the content (e.g., a web page, a media viewer) to a user. The content viewer 111 may represent or include an embedded media player (e.g., a Flash® player or an HTML5 player) that is embedded in a web page (e.g., a web page that may provide information about a product sold by an online merchant). In another example, the content viewer 111 may be a standalone application that allows users to view digital media items (e.g., digital videos, digital images, electronic books, etc.).

The content viewer 111 may be provided to the user device 105 and the playback device 108by the content sharing platform 120. For example, the content viewer 111 may be an embedded content player that is embedded in web pages provided by the content sharing platform 120. In another example, the content viewer 111 may be an application that is downloaded from the server 130. In yet another example, different content viewers can be used for the user device 105 and the playback device 108.

In an embodiment, a user of the user device 105 desires to play content (e.g., a private video, such as content 121A-121Z) from a content sharing platform 120 on the playback device 108, where the user is authorized to play the content on the content viewer 111 on the user device 105, but not on the content viewer 111 on the playback device 108. The user can use the user device 105 to determine an IP address of the playback device 108, e.g., via a wireless network 152, or by manual entry. The user device 105 can request a token (e.g., a video verification token) from a token system 112 on the token server 110 via the network 102, where the token can be used to authorize play of the content on the playback device 108. The request for the token can include a user credential that may include or identify a user ID, a content ID indicating the content that the user would like to share, and the IP address of the playback device 108. The request can also include a validity period indicating the period over which the user would like for the playback device 108 to be able to play the content.

The token system 112 can verify the user credential (e.g., with respect to the user ID). For example, the token system 108 can submit the user credential of the user to the verification server 115 for verification. The verification server 115 can verify the received user credential and notify the token system 112 that the user credential has been verified. In an embodiment, the token system 112 can also verify that the user associated with the user ID is authorized to view the content indicated by the content ID. Once the user credential has been verified, the token can be generated, where the content ID, the IP address of the playback device 108, and, optionally, the validity period are associated with the token, and the token can be sent to the playback device 108 at the IP address via the network 102. For example, the token can be a code (e.g., including a certain number of randomly generated characters), and the code can be associated with the content IP, the IP address, the user ID, and the validity period in a database in the data store 150.

At playback time, the playback device 108 can send a request to play the content to the content sharing platform 120 along with the token. The content sharing platform 120 can verify the token in view of the request through the token system 112 via the network 102. For example, the token system 112 can verify that the IP address of the playback device 108 that sent the request is the same IP address associated with the token. In an embodiment, the token system 112 can also verify that content that the playback device 108 has requested to play matches the content ID associated with the token. In an embodiment, the token system 112 can also verify that the request to play the content was received within the validity period. The token system 112 or the content sharing platform can also verify that the user associated with the user ID is authorized to view the embodiment at the time of the request, in one embodiment. This verification can be done based on access rights associated with the content item (e.g., as identified in access content list(s) or ACL(s) of the content item). The access content rights can be based on one or more criteria such as a limited list of viewers (as defined by the owner of the content item) having access to the content item, a payment of a fee for viewing the content item (e.g., if the content item is a paid item), or a viewer age (e.g., if the content item is an age-restricted item).

Once the token system 112 has verified the token, the token system 112 can send notification of the verification to the content sharing platform 120. Upon receipt of notification of the verification, the content sharing platform 120 can authorize the playback device 108 to play the content on the content viewer 111. The playback device 108 can now play the content.

Although implementations of the disclosure are discussed in terms of content sharing platforms, implementations may also be generally applied to any type of network providing connections between users. Implementations of the disclosure are not limited to content sharing platforms.

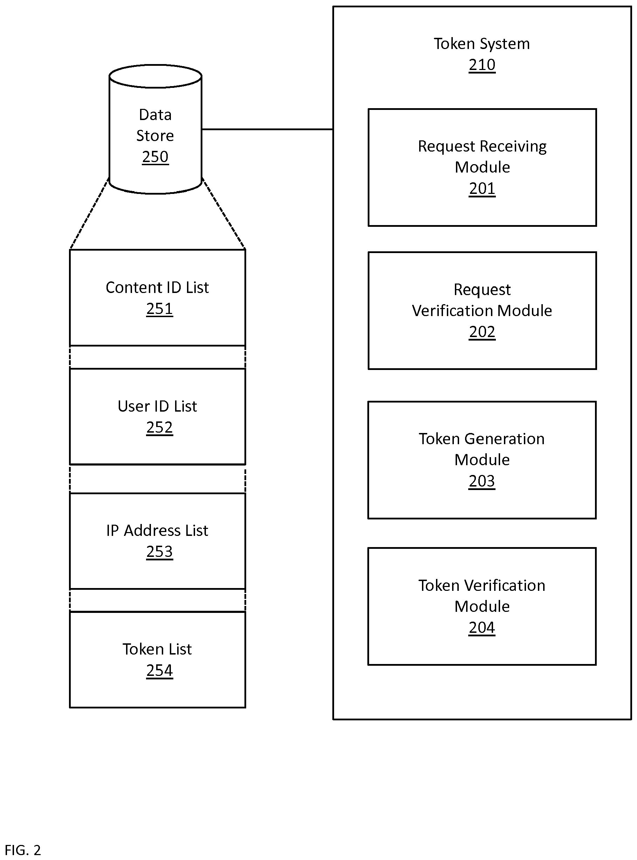

**FIG. 2** is a block diagram illustrating a token system 210 in accordance with one implementation of the disclosure. In one implementation, the token system 210 includes a request receiving module 201, a request verification module 202, a token generating module 203, and a token verification module 204. More or less components may be included in the token system 210 without loss of generality. For example, two of the modules may be combined into a single module, or one of the modules may be divided into two or more modules. In one implementation, one or more of the modules may reside on different computing devices (e.g., different server computers). In an embodiment, the token system 210 can be the token system 112 of **FIG. 1****.**

The token system 210 is communicatively coupled to data store 250. The data store 250 may be a memory (e.g., random access memory), a cache, a drive (e.g., a hard drive), a flash drive, a database system, or another type of component or device capable of storing data. The data store 250 may also include multiple storage components (e.g., multiple drives or multiple databases) that may also span multiple computing devices (e.g., multiple server computers). The data store 250 can be data store 150 of Figure 1.

As discussed above, the token system 210 facilitates sharing of content from an authorized device to an unauthorized device, such that a user can use an authorized device to select content to be displayed on an unauthorized device. In an embodiment, the request receiving module 201 receives a request from a user for a token (e.g., from a user device, such as a mobile phone), where the request includes a content ID associated with particular content (e.g., a video) that the user wants displayed and an IP address of a playback device (e.g., a television) where the user wants the content to be displayed. The request can also include a user credential (e.g., a user ID) associated with the user. Because the user has been authenticated on the user device (e.g., has logged in on the user device), the user credential can be sent with the request.

In an embodiment, the request can also indicate a token validity period. In another embodiment, a token validity period can be automatically applied or determined.

The request verification module 202 can then verify the request. The request verification module 202 can authenticate the user credential (e.g., via a verification server), and can also verify that the user is authorized to view the content (e.g., via a content sharing platform). Upon verifying the request, the request verification module 202 can store the content ID in a content ID list 251 in the data store 250, the user ID in a user ID list 252 in the data store 250, and the IP address of the playback device in an IP address list 253 in the data store 250.

The token generation module 203 can then generate a token (e.g., a video verification token) that is associated with the user ID, the content ID, and the IP address, and store the token in the token list 254. For example, the token can a code (e.g., a random nonce including randomly selected characters). The token generation module 204 can then send the token to the IP address for the playback device.

In order to play the content, the playback device can send the token along with a request to play the content to the content sharing platform where the content resides. For example, the request can include the content ID or the content ID can be determined via the token. The content sharing platform can also determine the IP address of the playback device sending the request.

The content sharing platform can then verify the token via the token verification module 204 of the token system 210. For example, the content sharing platform can send the token along with the IP address of the playback device to the token system. The token verification module 204 can determine the playback IP address in the IP address list 253 that is associated with the token in the token list 253. In an embodiment, the token verification module can also determine the content ID in the content ID list 251 that is associated with the token in the token list 253. If the IP address associated with the token matches the IP address received in the request (and, optionally, the content ID associated with the token matches the content ID received in the request), then the token verification module 204 can verify the token. The token verification module 204 can also verify that the user ID in the user ID list 252 associated with the token still has authority to access the content. If token verification module 204 verifies the token, the token verification module 204 can then send the verification to the content sharing platform. If the request did not include a content ID, then the token verification module 204 can also send the content ID to the content sharing platform.

Once the content sharing platform has received notification of verification of the token, the content sharing platform can authorized (or allow) the playback device to play the content.

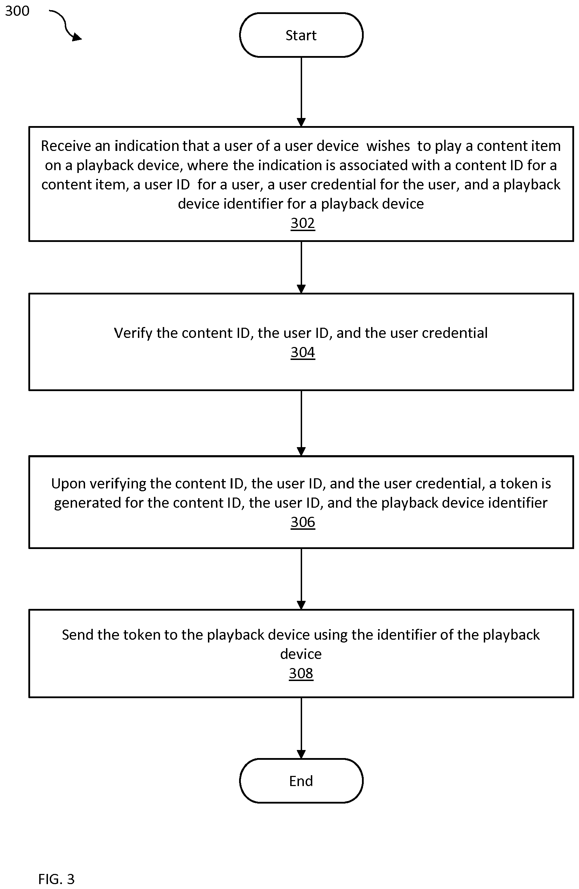

**FIG. 3** is a flow diagram illustrating an embodiment for a method 300 of content sharing. The method 300 may be performed by processing logic that may include hardware (e.g., circuitry, dedicated logic, programmable logic, microcode, etc.), software (e.g., instructions run on a processing device to perform hardware simulation), or a combination thereof. In one embodiment, the method 300 is performed by a token system (e.g., the token system 112 of **FIG. 1**).

For simplicity of explanation, the methods of this disclosure are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term "article of manufacture," as used herein, is intended to encompass a computer program accessible from any computer-readable device or storage media.

At block 302, processing logic receives an indication that a user of a user device wishes to play a content item on a playback device. The indication may be associated with a content ID for the content item, a user credential that may include or identifiy a user ID for the user, and a playback device identifier for a playback device. For example, an indication may be generated by the user device when the user submits a request to stream a video from the content sharing service using a smart phone or a tablet (e.g. by adding a video to a playlist). In response, the user device may submit an authorization request to a token server. The request may include a content ID for the content item, a user credential that may include or identify a user ID for the user, and a playback device identifier (e.g., an IP address, a name, etc.) for a playback device. Alternatively, the request may not initially include the user credential. Rather, the token server can request a user credential after receiving the authorization request from the user device. The user credential may be, for example, an authorization token (e.g., an OAuth token) or a cookie identifying the user device.

In some implementations, the request can also include a validity period. For example, a user associated with the user ID is logged into (or authenticated on) a user device where the user can view content, such as a video, associated with the content ID that is hosted by a content sharing platform. However, the user would prefer to have the content played on a playback device, such as a television.

In one example, the user might be speaking at a conference and may want to share a video with conference attendees on a television in a conference room. However, the user does not want to grant permission for any other video to be shown on the television and only wants permission to be granted to this particular television for a particular period of time. Therefore, a token can be requested via the user's mobile phone (where the user is already authenticated) that will allow the video to be played on the television in the conference room for a certain period of time, e.g., 24 hours.

At block 304, processing logic verifies the content ID and the user credential to ensure that the user identified by the user credential has access to the content identified by the content ID. For example, the user credential can be verified via a verification server. Processing logic can also verify whether the user associated with the user ID is authorized to play the content item associated with the content ID (based on the user's access rights with respect to the content item).

In an embodiment, processing logic can determine whether the request was submitted by a user that was authenticated by verifying whether the user logged into the content hosting platform using a mobile application or a browser session. For example, processing logic can verify whether the user logged into the content hosting platform using the mobile application or browser session by accessing state information (e.g., cookies) stored by the mobile application or browser session. If the state information (e.g., cookies) includes an authentication or identification of the user, processing logic can determine that the request was submitted by a user that was previously authenticated.

At block 306, upon verification of the content ID, the user credential with the user ID, processing logic generates a token for the content ID, the user ID and the playback device identifier. In one example, the token can be a code (e.g., a random nonce including a certain number of random characters). The token can then be associated with the user ID, the content ID, and the IP address in a data store. In another example, the token can be an encrypted token, where the user ID, the content ID, and the IP address are encrypted for inclusion as part of the token.

At block 308, processing logic sends the token to the playback device using the identifier of the playback device (e.g., the IP address included in the request). Once the playback device receives the token, the playback device can immediately request authorization to play the content. Alternatively, the playback device can place the request in a queue, and a period of time can pass prior to the playback device seeking authorization to play the content.

Further to the example above, the token can be sent to the television in the conference room, such that play of the content on the television in the conference room can be authorized via the token during the selected period of time.

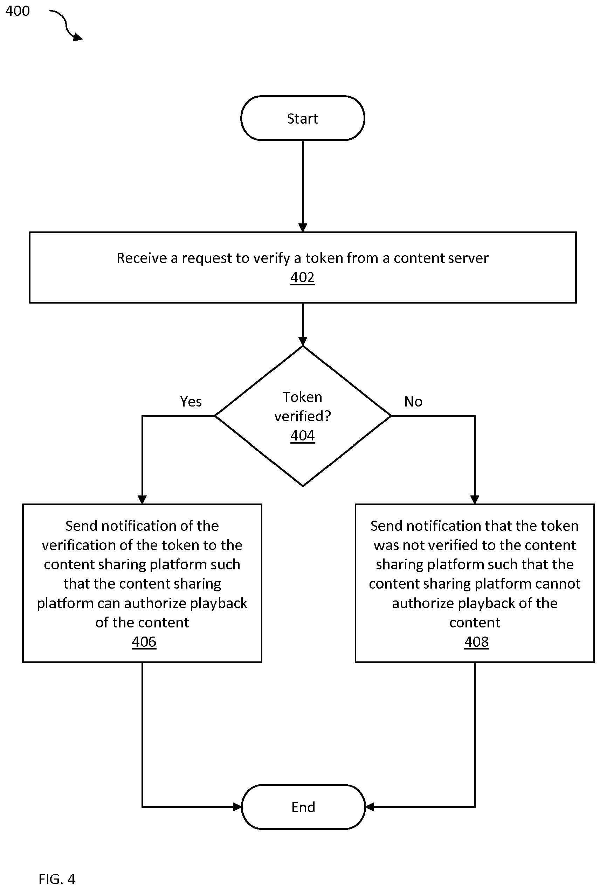

**FIG. 4** is a flow diagram illustrating an embodiment for a method 400 of content sharing. The method 400 may be performed by processing logic that may include hardware (e.g., circuitry, dedicated logic, programmable logic, microcode, etc.), software (e.g., instructions run on a processing device to perform hardware simulation), or a combination thereof. In one embodiment, the method 400 is performed by a token system (e.g., the token system 112 of **FIG. 1**).

At block 402, processing logic receives a request to verify a token from a content sharing platform, where the content sharing platform has received a request from a playback device for authorization to play certain content along with the token. The request can also include an IP address of playback device and a content ID associated with the content.

Further to the example above, when the user would like to play the video on the television in the conference room, the user can cause a request to be sent to the content sharing platform where the video resides, where the request includes the token. The content sharing platform can request that the token system verify the token.

At block 404, processing logic attempts to verify the token. For example, processing logic determines whether the IP address included with the request matches the IP address associated with the token in a data store. Processing logic can also determine whether the content ID included with the request matches the content ID associated with the token in the data store, if the request included a content ID. Processing logic can also verify that the user that initially requested that the token be generated is still authorized to play the content. Additionally, processing logic can also verify that a validity period has not expired.

At block 406, upon verification of the token, processing logic sends notification of the verification of the token to the content sharing platform such that the content sharing platform can authorized play of the content. If the request did not include a content ID, processing logic can also send the content ID associated with the token to the content sharing platform.

Further to the example above, once the token is verified, the user can now play the desired video on the television in the conference room so that the attendees can see the video. However, the user can feel secure that the attendees cannot see any of the user's other private videos and that the attendees will not be able to see the desired video any more after 24 hours have passed.

At block 408, upon determining that the token cannot be verified, processing logic sends notification to the content sharing platform that the token was not verified such that the content sharing platform does not authorized play of the content.

Further to the example above, if the user requested the token two days before the conference, the user will no longer be able to play the desired content on the television in the conference room. Here, the user will have to use the user's mobile phone to request another token be sent to the television in the conference room.

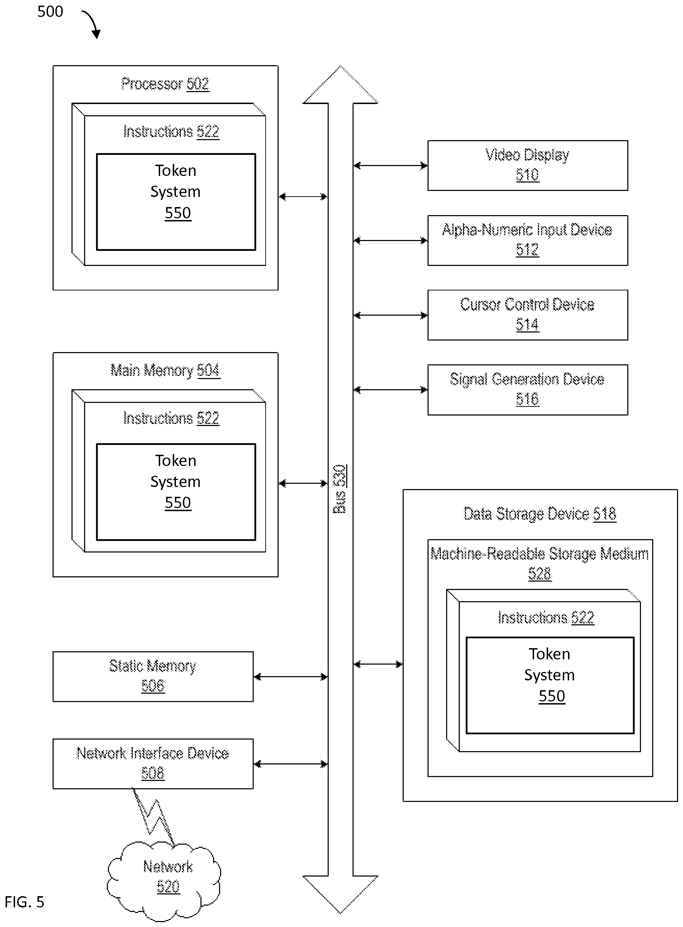

**Figure 5** illustrates a diagrammatic representation of a machine in the exemplary form of a computer system 500 within which a set of instructions, for causing the machine to perform any one or more of the methodologies discussed herein, may be executed. In alternative embodiments, the machine may be connected (e.g., networked) to other machines in a LAN, an intranet, an extranet, or the Internet. The machine may operate in the capacity of a server or a client machine in client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 500 includes a processing device (processor) 502, a main memory 504 (e.g., read-only memory (ROM), flash memory, dynamic random access memory (DRAM) such as synchronous DRAM (SDRAM) or Rambus DRAM (RDRAM), etc.), a static memory 506 (e.g., flash memory, static random access memory (SRAM), etc.), and a data storage device 518, which communicate with each other via a bus 530.

Processor 502 represents one or more general-purpose processing devices such as a microprocessor, central processing unit, or the like. More particularly, the processor 502 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 502 may also be one or more special-purpose processing devices such as an application specific integrated circuit (ASIC), a field programmable gate array (FPGA), a digital signal processor (DSP), network processor, or the like. The processor 502 is configured to execute instructions 522 for performing the operations and steps discussed herein.

The computer system 500 may further include a network interface device 508. The computer system 500 also may include a video display 510 (e.g., a liquid crystal display (LCD) or a cathode ray tube (CRT)), an alphanumeric input device 512 (e.g., a keyboard), a cursor control device 514 (e.g., a mouse), and a signal generation device 516 (e.g., a speaker).

The data storage device 518 may include a machine-readable (or computer-readable) storage medium 528 on which is stored one or more sets of instructions 522 (e.g., software) embodying any one or more of the methodologies or functions described herein. The instructions 522 may also reside, completely or at least partially, within the main memory 504 and/or within the processor 502 during execution thereof by the computer system 500, the main memory 504 and the processor 502 also constituting computer-readable storage media. The instructions 522 may further be transmitted or received over a network 516 via the network interface device 508.

In one embodiment, the instructions 522 include instructions for a token system 550, which may correspond to token system 112 of **Figure 1****,** and/or a software library containing methods that performs offline content sharing. While the machine-readable storage medium 528 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "machine-readable storage medium" or "computer-readable storage medium" shall also be taken to include any medium that is capable of storing, encoding or carrying a set of instructions for execution by the machine and that cause the machine to perform any one or more of the methodologies of the present disclosure. The terms "machine-readable storage medium" or "computer-readable storage medium" shall accordingly be taken to include, but not be limited to, solid-state memories, optical media, and magnetic media.

In the foregoing description, numerous details are set forth. It will be apparent, however, to one of ordinary skill in the art having the benefit of this disclosure, that the present disclosure may be practiced without these specific details. In some instances, well-known structures and devices are shown in block diagram form, rather than in detail, in order to avoid obscuring the present disclosure.

Some portions of the detailed description have been presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "determining", "computing", "calculating", "obtaining", "identifying", "presenting," "receiving," "modifying", "subscribing", "providing" or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

The present disclosure also relates to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

Reference throughout this specification to "one embodiment" or "an embodiment" means that a particular feature, structure, or characteristic described in connection with the embodiment is included in at least one embodiment. Thus, the appearances of the phrase "in one embodiment" or "in an embodiment" in various places throughout this specification are not necessarily all referring to the same embodiment. In addition, the term "or" is intended to mean an inclusive "or" rather than an exclusive "or."

It is to be understood that the above description is intended to be illustrative, and not restrictive. Many other embodiments will be apparent to those of skill in the art upon reading and understanding the above description. The scope of the disclosure should, therefore, be determined with reference to the appended claims, along with the full scope of equivalents to which such claims are entitled.

## Claims

1. A method for transferring authorization to play a content item from a user device (105) to a playback device (108), wherein the item is authorized for playback on the user device (105), the method comprising:
receiving, by a processing device, an indication that a user of the user device (105) wishes to play the content item on the playback device (108), wherein the indication is associated with a content ID for the content item, a user credential for the user, and a playback device identifier for the playback device (108);
in response to receiving the indication, verifying, by the processing device, the content ID and the user credential;
upon verifying the content ID and the user credential, generating, by the processing device, a token for the content ID, the user identified by the user credential and the playback device identifier, wherein the token authorizes play of the content item on the playback device (108);
sending, by the processing device, the token to the playback device (108);
receiving, by the processing device, the token and a request for the content item from the playback device (108), wherein the request is associated with the playback device (108);
verifying, by the processing device, that the request and the token received from the playback device (108) match; and
in response to the verifying, authorizing, by the processing device, the playback device (108) to present the content item.

2. The method of claim 1, wherein access rights with respect the content item are defined based on one or more criteria.

3. The method of claim 1, wherein the one or more criteria comprise at least one of a limited list of viewers having access to the content item, a payment of a fee for viewing the content item, or a viewer age.

4. The method of claim 1 further comprising:
receiving, from a content sharing platform associated with the content item, a request to verify the token, wherein the playback device (108) sent a request to play the content item with the token to the content sharing platform; and
upon verification of the token, sending notification of the verification of the token to the content sharing platform.

5. The method of claim 1, wherein the token is a non-cryptographic token.

6. The method of claim 4, further comprising verifying that the user is authorized to view the content associated with the content ID.

7. The method of claim 1, wherein the indication is further associated with a time period for which the playback device (108) is authorized to play the content.

8. A non-transitory computer readable storage medium having instructions that, when executed by a processing device, cause the processing device to perform a method according to any one of the preceding claims.

9. A computing device comprising:
a memory; and
a processing device coupled to the memory, wherein the processing device is configured to carry out a method according to any one of claims 1 to 7.

## Patentansprüche

1. Verfahren zum Übertragen einer Autorisierung zum Abspielen eines Inhaltselements von einer Benutzervorrichtung (105) an eine Wiedergabevorrichtung (108), wobei das Element zur Wiedergabe auf der Benutzervorrichtung (105) autorisiert wird; wobei das Verfahren umfasst:
Empfangen, durch eine Verarbeitungsvorrichtung, eines Hinweises, dass ein Benutzer der Benutzervorrichtung (105) das Inhaltselement auf der Wiedergabevorrichtung (108) abspielen möchte, wobei der Hinweis einer Inhalts-ID für das Inhaltselement, einer Benutzeranmeldeberechtigung für den Benutzer und einer Wiedergabevorrichtungskennung für die Wiedergabevorrichtung (108) zugeordnet ist;
als Reaktion auf das Empfangen des Hinweises, Überprüfen, durch die Verarbeitungsvorrichtung, der Inhalts-ID und der Benutzeranmeldeberechtigung;
beim Überprüfen der Inhalts-ID und der Benutzeranmeldeberechtigung, Erzeugen, durch die Verarbeitungsvorrichtung, eines Tokens für die Inhalts-ID, wobei der Benutzer durch die Benutzeranmeldeberechtigung und die Wiedergabevorrichtungskennung identifiziert wird, wobei das Token das Abspielen des Inhaltselements auf der Wiedergabevorrichtung (108) autorisiert;
Senden, durch die Verarbeitungsvorrichtung, des Tokens an die Wiedergabevorrichtung (108);
Empfangen, durch die Verarbeitungsvorrichtung, des Tokens und einer Anforderung für das Inhaltselement von der Wiedergabevorrichtung (108), wobei die Anforderung der Wiedergabevorrichtung (108) zugeordnet ist;
Überprüfen, durch die Verarbeitungsvorrichtung, dass die Anforderung und das Token, die von der Wiedergabevorrichtung (108) empfangen wurden übereinstimmen; und
als Reaktion auf das Überprüfen, Autorisieren, durch die Verarbeitungsvorrichtung, der Wiedergabevorrichtung (108) zur Präsentation des Inhaltselements.

2. Verfahren nach Anspruch 1, wobei die Zugriffsrechte bezüglich des Inhaltselements basierend auf einem oder mehreren Kriterien definiert werden.

3. Verfahren nach Anspruch 1, wobei das eine oder die mehreren Kriterien mindestens eines der folgenden umfassen: eine begrenzte Liste von Zuschauern, die Zugriff auf das Inhaltselement haben, die Zahlung einer Gebühr für die Anzeige des Inhaltselements, oder das Alter des Zuschauers.

4. Verfahren nach Anspruch 1, ferner umfassend:
Empfangen, von einer Inhalts-Sharing-Plattform, die dem Inhaltselement zugeordnet ist, einer Anforderung zur Überprüfung des Tokens, wobei die Wiedergabevorrichtung (108) eine Anforderung zum Abspielen des Inhaltselements mit dem Token an die Inhalts-Sharing-Plattform gesendet hat; und
beim Überprüfen des Tokens, Senden einer Benachrichtigung über die Überprüfung des Tokens an die Inhalts-Sharing-Plattform.

5. Verfahren nach Anspruch 1, wobei das Token ein nicht-kryptographisches Token ist.

6. Verfahren nach Anspruch 4, ferner umfassend das Überprüfen, dass der Benutzer zur Anzeige des der Inhalts-ID zugeordneten Inhalts autorisiert ist.

7. Verfahren nach Anspruch 1, wobei der Hinweis ferner einer Zeitperiode zugeordnet wird, für welche die Wiedergabevorrichtung (108) zum Abspielen des Inhalts autorisiert ist.

8. Nichtflüchtiges computerlesbares Speichermedium, welches Anweisungen aufweist, welche, wenn durch eine Verarbeitungsvorrichtung ausgeführt, veranlassen, dass die Verarbeitungsvorrichtung ein Verfahren nach einem der vorhergehenden Ansprüche ausführt.

9. Computervorrichtung, umfassend:
einen Speicher; und
eine Verarbeitungsvorrichtung, welche mit dem Speicher gekoppelt ist, wobei die Verarbeitungsvorrichtung konfiguriert ist, um ein Verfahren nach einem der Ansprüche 1 bis 7 auszuführen.

## Revendications

1. Procédé de transfert d'autorisation permettant de lire un élément de contenu d'un dispositif d'utilisateur (105) sur un dispositif de lecture (108), dans lequel l'élément est autorisé à être lu sur le dispositif utilisateur (105), le procédé comprenant :
la réception, par un dispositif de traitement, d'une indication qu'un utilisateur du dispositif utilisateur (105) souhaite lire l'élément de contenu sur le dispositif de lecture (108), dans lequel l'indication est associée à une ID de contenu pour l'élément de contenu, à un identifiant utilisateur pour l'utilisateur, et à un identifiant du dispositif de lecture pour le dispositif de lecture (108) ;
en réponse à la réception de l'indication, la vérification, par le dispositif de traitement, de l'ID de contenu et de l'identifiant utilisateur ;
lors de la vérification de l'ID de contenu et de l'identifiant utilisateur, la génération, par le dispositif de traitement, d'un token pour l'ID de contenu, l'utilisateur identifié par l'identifiant utilisateur et l'identifiant du dispositif de lecture, dans lequel le token autorise la lecture de l'élément de contenu sur le dispositif de lecture (108) ;
l'envoi, par le dispositif de traitement, du token au dispositif de lecture (108) ;
la réception, par le dispositif de traitement, du token et d'une demande pour l'élément de contenu du dispositif de lecture (108), dans lequel la demande est associée au dispositif de lecture (108) ;
la vérification, par le dispositif de traitement, que la demande et le token reçus du dispositif de lecture (108) correspondent ; et
en réponse à la vérification, l'autorisation, par le dispositif de traitement, du dispositif de lecture (108) afin qu'il présente l'élément de contenu.

2. Procédé selon la revendication 1, dans lequel des droits d'accès relativement à l'élément de contenu sont définis sur la base d'un ou plusieurs critères.

3. Procédé selon la revendication 1, dans lequel le ou les critères comprennent au moins un d'une liste limitée de spectateurs ayant accès à l'élément de contenu, un paiement d'un droit permettant de visualiser l'élément de contenu ou l'âge d'un spectateur.

4. Procédé selon la revendication 1, comprenant en outre :
la réception, par une plate-forme de partage de contenu associée à l'élément de contenu, d'une demande permettant de vérifier le token, dans lequel le dispositif de lecture (108) a envoyé une demande afin de lire l'élément de contenu avec le token à la plate-forme de partage de contenu ; et
lors de la vérification du token, l'envoi d'une notification de la vérification du token à la plate-forme de partage de contenu.

5. Procédé selon la revendication 1, dans lequel le token est un token non-cryptographique.

6. Procédé selon la revendication 4, comprenant en outre la vérification que l'utilisateur est autorisé à visualiser le contenu associé à l'ID de contenu.

7. Procédé selon la revendication 1, dans lequel l'indication est en outre associée à un laps de temps pendant lequel le dispositif de lecture (108) est autorisé à lire le contenu.

8. Support de stockage lisible sur ordinateur non-transitoire présentant des instructions qui, lorsqu'elles sont exécutées par un dispositif de traitement, amènent le dispositif de traitement à réaliser un procédé selon l'une quelconque des revendications précédentes.

9. Dispositif informatique comprenant :
une mémoire ; et
un dispositif de traitement raccordé à la mémoire, dans lequel le dispositif de traitement est configuré pour exécuter un procédé selon l'une quelconque des revendications 1 à 7.
